# EUROPÄISCHE PATENTSCHRIFT

(11) **EP 1 922 793 B1**
(45) Veröffentlichungstag und Bekanntmachung des Hinweises auf die Patenterteilung: **16.11.2011**
(21) Anmeldenummer: 06777078.4
(22) Anmeldetag: 26.08.2006
(51) Int. Cl.: H02G 3/06, H02G 15/04

(54) **BAUSATZ ODER SET UMFASSEND WENIGSTENS ZWEI UNTERSCHIEDLICH BEMESSENE TYPEN VON KABELVERSCHRAUBUNGEN**
KIT OR SET COMPRISING AT LEAST TWO DIFFERENTLY DIMENSIONED TYPES OF CABLE GLANDS
JEU DE PIECES DETACHEES OU KIT COMPORTANT AU MOINS DEUX TYPES A DIMENSIONS DIFFERENTES DE DISPOSITIFS DE FIXATION DE CABLES PAR VISSAGE

(30) Priorität: 07.09.2005 DE 202005014138 U
(43) Veröffentlichungstag der Anmeldung: 21.05.2008
(73) Patentinhaber: Anton Hummel Verwaltungs-GmbH, 79183 Waldkirch (DE)
(72) Erfinder: BARTHOLOMÄ, Mario, 79297 Winden (DE); ZÜGEL, Fritz, 79183 Waldkirch (DE); GERBER, Philipp, 79261 Gutach (DE)
(74) Vertreter: Maucher, Wolfgang
(86) Internationale Anmeldenummer: PCT/EP2006/008378
(87) Internationale Veröffentlichungsnummer: WO 2007/028516

(56) Entgegenhaltungen:
- GB-A- 1 163 901
- GB-A- 2 269 711
- GB-A- 2 296 998

## Beschreibung

Die Erfindung betrifft einen Bausatz oder Set umfassend wenigstens zwei unterschiedlich bemessene Typen von Kabelverschraubungen zum Erfassen oder Fixieren von Kabeln unterschied licher Durchmesser.

Das Dokument GB-A-2296998 beschreibt eine Durchführung, wobei jede Kabelverschraubung zwei unter-schiedlich bemessene Klemm- und/oder Dichtungsstellen mit zwei unterschiedlich bemessenen Klemm- und/oder Dichteinsätzen aufweist und der Klemm- oder Dichteinsatz mit einem größeren Innendurchmesser für das Erfassen eines äußeren Kabelmantels und der Klemm- oder Dichteinsatz mit dem kleineren Innendurchmesser zum Erfassen eines wenigstens teilweise abisolierten Bereichs des Kabels beispielsweise an einem inneren Mantel dient, wobei zwischen einer äußeren Ummantelung und einer inneren Ummantelung des Kabels insbesondere ein Abschirm- oder Erdungsgeflecht vorgesehen ist, das zwischen den beiden Klemmstellen der Kabelverschraubung in Gebrauchsstellung mit dieser in elektrisch leitendem Kontakt ist, wobei die Klemm- oder Dichteinsätze jeweils als separate Teile innerhalb einer Schraubhülse oder einem Gehäuse angeordnet sind.

Eine Kabelverschraubung mit zwei unterschiedlich bemessenen Klemm- und/oder Dichtungsstellen ist aus EP 0 618 655 B1 bekannt. Der größer bemessene Klemmeinsatz ist dabei durch eine mit Hilfe einer Überwurfmutter stauchbare Dichtung gebildet, während der zweite Klemm- und Dichtungseinsatz als konisch nach innen gerichtete Dichtungsmembrane ausgebildet ist, die mit einer Dichtlippe an der Außenseite des entsprechenden Abschnitts oder Bereichs des Kabels anliegt und durch einen Überdruck stärker an das Kabel angepresst werden kann, wobei ein Tragteil vorgesehen ist, um ein Umstülpen dieses Dichtungseinsatzes zu verhindern.

Diese vorbekannte Kabelverschraubung ist entsprechend vielteilig, was sich um so stärker auswirkt, je mehr solcher Kabelverschraubungen unterschiedlicher Abmessungen für unterschiedlich dicke Kabel erforderlich sind. Darüber hinaus muss beim Einstecken des Kabels vor allem an dem kleiner bemessenen Dichteinsatz sorgfältig vorgegangen werden, weil dessen Innenöffnung schon bei der Montage an der Kabelaußenseite diese berührend entlang gleitet.

Es besteht deshalb die Aufgabe, einen Set oder Bausatz von unterschiedlich bemessenen Kabelverschraubungen der eingangs genannten Art zu schaffen, bei welchem die Anzahl der unterschiedlich bemessenen Einzelteile vermindert ist und das Einschieben des Kabels oder das Aufstecken der jeweiligen Kabelverschraubung auf ein Kabel weitgehend reibungsfrei an beiden Klemm- oder Dichtstellen erfolgen kann.

Zur Lösung dieser scheinbar widersprüchlichen Aufgabe ist der eingangs definierte Bausatz oder Set von Kabelverschraubungen **dadurch gekennzeichnet, dass** der kleinere Klemm- oder Dichteinsatz eines ersten größeren Typs von Kabelverschraubungen dieselben Abmessungen wie der größere Klemm- oder Dichteinsatz eines zweiten kleineren Typs der Kabelverschraubung hat.

Somit können für unterschiedlich bemessene Kabelverschraubungen dennoch übereinstimmende Klemm- und/oder Dichteinsätze verwendet werden, weil der kleinere derartige Dichtungseinsatz einer größeren Kabelverschraubung auch als größerer Dichtungseinsatz der kleinen oder nächst kleineren Kabelverschraubung verwendbar ist. Die Anzahl der erforderlichen unterschiedlichen Teile solcher mehrerer unterschiedlich bemessener Kabelverschraubungen kann dadurch erheblich reduziert werden. Gleichzeitig ermöglicht diese baugleiche Ausbildung von Klemm- oder Dichteinsätzen oder -modulen eine größere Serie dieser übereinstimmenden Module für unterschiedliche Typen von Kabelverschraubungen, also eine größere Serienfertigung und damit Kosteneinsparung.

Zweckmäßig ist es dabei, wenn der Klemmeinsatz einen in eine Schraubhülse passenden und sich an deren Stirnseite abstützenden Stutzen und an seinem diesen Stutzen und damit auch die Schraubhülse überragenden Bereich durch in axialer Richtung verlaufende Schlitze getrennte Klemmfinger hat, die durch eine Druckschraube oder Überwurfmutter mittels vorzugsweise an dieser vorgesehenen Schrägflächen radial einwärts verstellbar sind, wobei die Klemmfinger des größeren und des kleineren Klemmeinsatzes jeweils in derselben Richtung verlaufen. Somit kann der kleinere Klemmeinsatz einer größeren Kabelverschraubung problemlos an die Stelle des größeren Klemmeinsatzes einer kleineren Kabelverschraubung treten, weil seine Klemmfinger dann auch dort in derselben Richtung orientiert sind wie bei dem größeren Klemmeinsatz.

Besonders günstig ist es dabei, wenn die Klemmfinger an einem Haltering angeordnet, beispielsweise einstückig damit verbunden sind, der an einer Formdichtung insbesondere an einem radialen Vorsprung anliegt, wobei die Formdichtung den in die Schraubhülse eingreifenden Stutzen und einen demgegenüber axial vorstehenden Klemm- und Dichtungsbereich aufweist, welcher von den außen angeordneten Klemmfingern zumindest in radialer Richtung beaufschlagt ist. Beim axialen Anziehen einer Druckschraube oder Überwurfmutter können also die Klemmfinger in an sich bekannter Weise radial nach innen verformt und dadurch die Dichtung an das Kabel angedrückt und somit die Klemmwirkung erzielt werden. Dies kann an beiden Klemm- und Dichtstellen der jeweiligen Kabelverschraubung in übereinstimmender Weise geschehen.

Der Dichtungsbereich der Formdichtung kann eine abgestufte Stirnseite haben und mit einem Bereich kleineren Querschnitts in Gebrauchsstellung zwischen Kabeloberfläche und Klemmfingern verlaufen. Somit wirken die Klemmfinger nicht unmittelbar auf die Kabeloberfläche sondern nur indirekt über diesen Teil der Formdichtung, wodurch das Kabel an beiden Dicht- und Klemmstellen geschont wird.

Eine Ausgestaltung des erfindungsgemäßen Bausatzes oder Sets kann vorsehen, dass er wenigstens drei unterschiedlich groß bemessene Typen von Kabelverschraubungen mit jeweils zwei unterschiedlich bemessenen Klemm- oder Dichteinsätzen aufweist und dass der kleinere Klemm- oder Dichteinsatz des Typs mit der größten Abmessung baugleich mit dem größeren Klemm- oder Dichteinsatz des mittleren Typs der Kabelverschraubungen und der kleinere Klemmeinsatz des Typs mittlerer Abmessung baugleich mit dem größten Klemm- und Dichteinsatz des kleinsten Typs der Kabelverschraubungen ist. In gleicher Weise können auch noch mehr unterschiedlich bemessene Typen von Kabelverschraubungen einen Bausatz oder Set bilden, wobei jeweils in der beschriebenen Weise der kleinere Klemmeinsatz eines Typs einer größeren Kabelverschraubung den größeren Klemm- und Dichtungseinsatz einer kleineren derartigen Kabelverschraubung bilden kann, so dass insgesamt bei einem solchen Bausatz oder Set von unterschiedlich bemessenen Kabelverschraubungen die Anzahl der unterschiedlich bemessenen Klemm- und Dichteinsätze erheblich reduziert ist und die Anzahl baugleicher derartiger Einsätze entsprechend vergrößert ist, was den Herstellungsaufwand vermindert. In vorteilhafter Weise sorgen dabei die durch Klemmfinger gebildeten Klemmeinsätze dafür, dass bei geöffnetem Klemmeinsatz das Kabel praktisch berührungsfrei oder mit nur geringer Reibung eingeschoben werden kann, wonach es dann durch das Anziehen des jeweiligen Klemmeinsatzes erfasst und fixiert wird.

Nachstehend ist ein Ausführungsbeispiel der Erfindung anhand der Zeichnung näher beschrieben. Es zeigt in zum Teil schematisierter Darstellung:

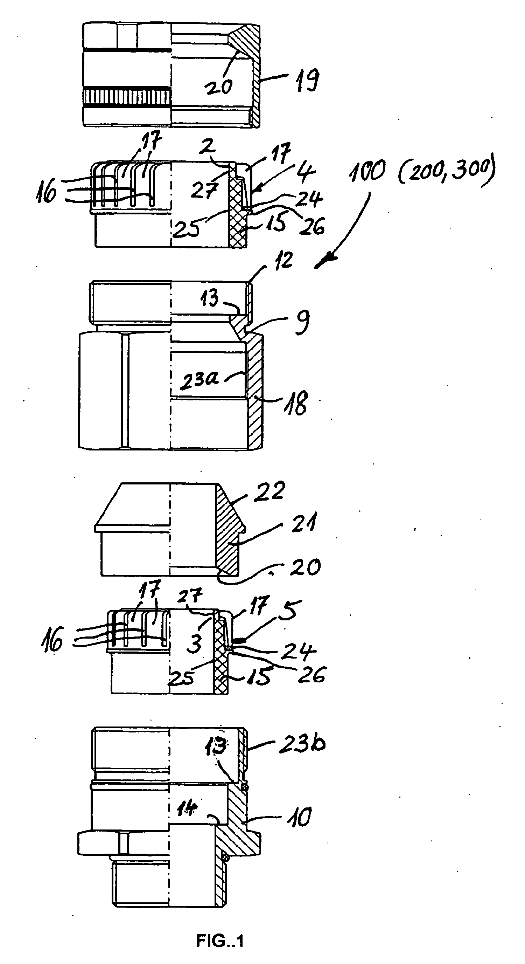

- Fig. 1: zur Hälfte in Seitenansicht und zur anderen Hälfte im Längsschnitt eine Kabelverschraubung eines erfindungsgemäßen Bausatzes in Explosionsdarstellung, d.h. die einzelnen Teile dieser Kabelverschraubung sind auseinandergezogen erkennbar,

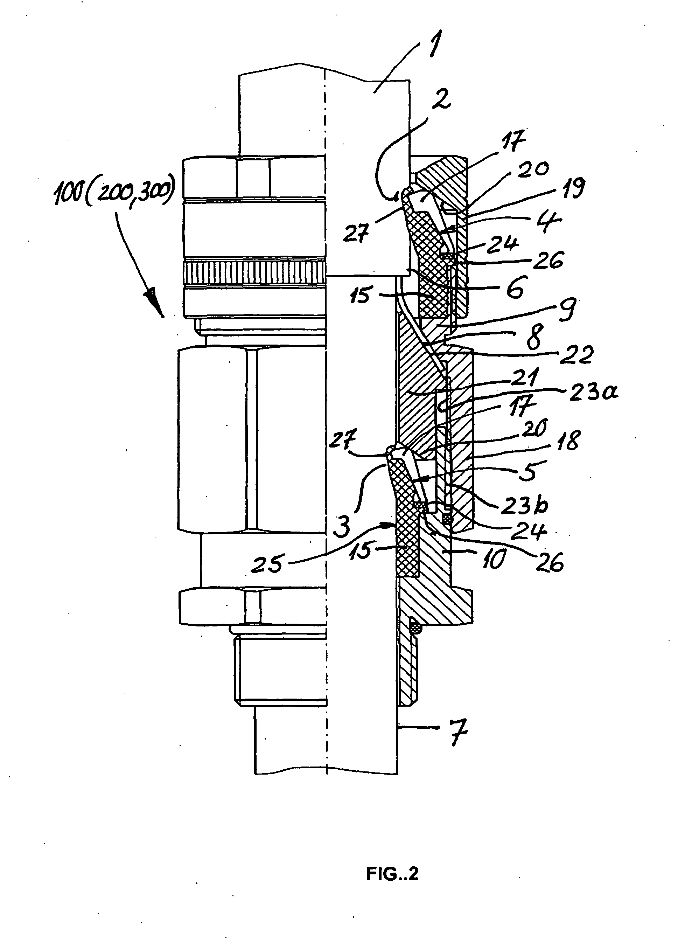

- Fig. 2: die Kabelverschraubung gemäß Fig.1 in montiertem Zustand, wobei ein Kabel an einer ersten größeren Klemm- und Dichtungsstelle an einer äußeren Ummantelung und an einer axial demgegenüber versetzten kleineren Klemm- und Dichtungsstelle an einer inneren Ummantelung erfasst und fixiert ist, sowie

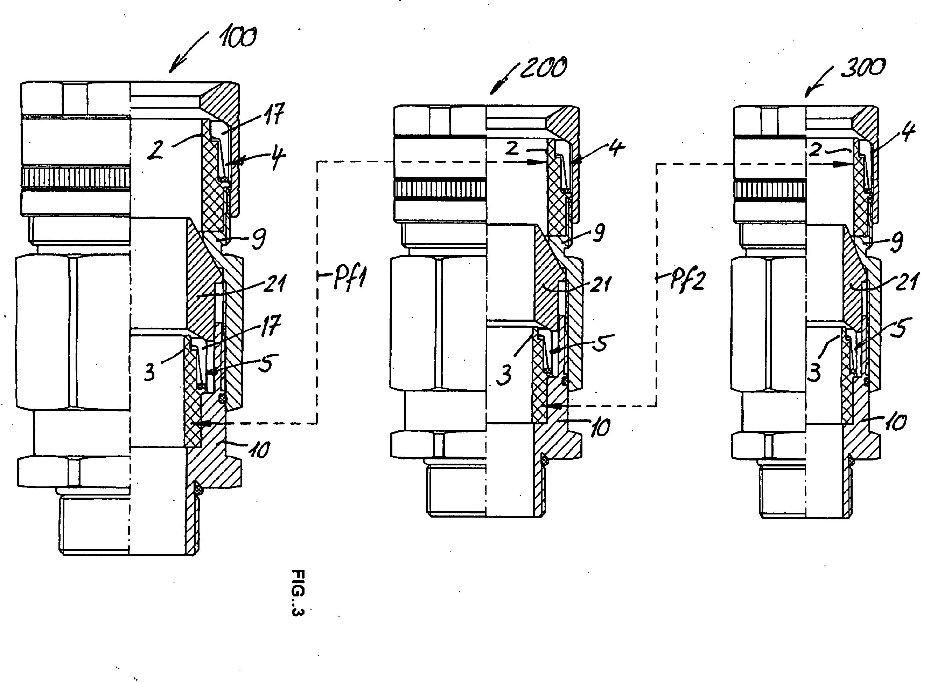

- Fig. 3: drei unterschiedlich bemessene derartige Kabelverschraubungen teils in Ansicht, teils im Längsschnitt, die jeweils einen übereinstimmenden Aufbau wie die Kabelverschraubung gemäß Fig.1 haben, aber unterschiedlich bemessen sind, wobei jeweils der kleinere Klemm- oder Dichtungseinsatz einer größeren Kabelverschraubung baugleich mit dem größeren Klemmoder Dichtungseinsatz einer kleineren Kabelverschraubung ist.

Ein in Fig.3 dargestellter Bausatz oder Set umfasst wenigstens zwei, in diesem Falle drei unterschiedlich bemessene Typen von im Ganzen mit 100, 200 und 300 bezeichneten Kabelverschraubungen, die jeweils unterschiedlich bemessen sind, sonst aber in ihrer Funktion übereinstimmende Teile haben, die deshalb im Folgenden übereinstimmende Bezugszahlen erhalten.

Diese in Fig.3 dargestellten unterschiedlich bemessenen Typen von Kabelverschraubungen können dabei in der jeweiligen Größe selbstverständlich mehrfach vorhanden sein. Sie dienen zum Erfassen oder Fixieren von Kabeln 1 unterschiedlicher Durchmesser, wobei in Fig.2 ein derartiges Kabel 1 dargestellt ist.

Dabei erkennt man, dass jede Kabelverschraubung 100, 200 und 300 zwei unterschiedlich bemessene Klemm- oder Dichtungsstellen 2 und 3 mit entsprechend unterschiedlich bemessenen Klemm- und Dichteinsätzen 4 und 5 aufweist, wobei mit 4 der größere Klemm-und Dichtungseinsatz und mit 5 der kleinere Klemm- und Dichteinsatz bezeichnet sind.

Der Klemmeinsatz 4 mit einem größeren Innendurchmesser dient zum Erfassen eines äußeren Kabelmantels 6 und der Klemm- oder Dichteinsatz 5 mit dem kleineren Innendurchmesser beziehungsweise der kleineren Abmessung dient zum Erfassen eines teilweise abisolierten Bereichs des Kabels 1 beispielsweise an einem inneren Mantel 7 des Kabels, wobei gemäß Fig.2 zwischen der äußeren Ummantelung 6 und der inneren Ummantelung 7 dieses Kabels ein Abschirm- oder Erdungsgeflecht 8 vorgesehen ist, das zwischen den beiden Klemm- oder Dichtungsstellen 2 und 3 der jeweiligen Kabelverschraubung 100, 200 oder 300 in Gebrauchsstellung mit dieser innenseitig in elektrisch leitendem Kontakt ist. Die Klemm- oder Dichteinsätze 4 und 5 sind dabei, was besonders gut in Fig.1 erkennbar ist, separate Teile, die in Gebrauchsstellung jeweils innerhalb einer Schraubhülse 9 und 10 angeordnet sind, wobei sie diese mit ihrem eigentlichen Klemmbereich jeweils überragen.

vor allem anhand der Fig.3 erkennt man, dass der jeweils kleinere Klemm- oder Dichteinsatz 5 eines größeren Typs von Kabelverschraubungen 100 dieselben Abmessungen wie der größere Klemm- oder Dichteinsatz 4 eines zweiten kleineren Typs der Kabelverschraubung 200 hat und dies setzt sich bei dem Set von Kabelverschraubungen 100, 200 und 300 gemäß Fig.3 dahingehend fort, dass wiederum der kleinere Klemm- oder Dichteinsatz 5 der Kabelverschraubung 200 baugleich mit dem größeren Klemm- oder Dichteinsatz 4 des nächst kleineren Typs einer Kabelverschraubung 300 ist. Diese Übereinstimmung von Klemm- und Dichtungseinsätzen ist dabei in Fig.3 durch die abgewinkelten Pfeile Pf1 und Pf2 noch verdeutlicht.

Jeder Klemm- und Dichtungseinsatz 4 und 5 hat im Ausführungsbeispiel einen in eine der Schraubhülsen 9 und 10 passenden und sich an deren Stirnseite 12 und/oder einem inneren Absatz 13 oder 14 abstützenden Stutzen 15 und an seinem diesen Stutzen 15 und die jeweilige Schraubhülse 9 oder 10 überragenden Bereich durch in axialer Richtung verlaufende Schlitze 16 getrennte Klemmfinger 17, die praktisch einen Klemmeinsatz bilden.

Diese Klemmfinger 17 können jeweils durch eine Druckschraube 18 oder Überwurfmutter 19 mit an dieser vorgesehenen Schrägflächen 20 radial einwärts verstellt werden, wobei die Klemmfinger 17 des größeren und des kleineren Klemmeinsatzes jeweils in derselben axialen Richtung verlaufen, wie es besonders gut in Fig.2 erkennbar ist. Die Schrägfläche 20 für die Klemmfinger 17 des kleineren Klemm- und Dichtungseinsatzes 5 ist dabei an einem Druckring oder Klemmkörper 21 vorgesehen, der seinerseits durch die auch gleichzeitig als Überwurfmutter oder Druckschraube 18 ausgebildete Schraubhülse 9 mit deren Innenseite an einer weiteren Schrägfläche 22 beaufschlagt wird, wobei an dieser Stelle auch das Abschirmgeflecht 8 eingeklemmt wird. Die Schraubhülse 9 hat also in diesem Falle eine Doppelfunktion, indem sie gleichzeitig mit ihrem in Fig.1 1 und 2 unteren Teil mit einem dort vorgesehenen Innengewinde 23a das Außengewinde 23b der unteren kleineren Schraubhülse 10 beaufschlagt und durch ein Anziehen dieser Gewinde gegeneinander den Klemmkörper 21 in axialer Richtung gegen die Klemmfinger 17 des kleineren Klemm- und Dichtungseinsatzes 5 bewegt und dadurch diese radial nach innen verformt, wie es Fig.2 zeigt.

Gemäß Fig.1 1 sind die Klemmfinger 17 an einem Haltering 24 einstückig angeordnet, der an einer jeweiligen Formdichtung 25 an einem radialen Vorsprung 26 abgestützt ist und anliegt, wobei die Formdichtung 25 den in die Schraubhülse 9 oder 10 eingreifenden Stutzen 15 und einen demgegenüber axial vorstehenden Klemm- und Dichtungsbereich 27 aufweist, welcher von den außen angeordneten Klemmfingern 17 zumindest in radialer Richtung beaufschlagt ist, wie es deutlich in Fig.2 dargestellt ist.

Dabei hat dieser Dichtungsbereich 27 der jeweiligen Formdichtung 25 - wie in allen Figuren erkennbar - eine abgestufte Stirnseite und verläuft mit einem Bereich kleineren Querschnitts in Gebrauchsstellung zwischen Kabeloberfläche und Klemmfingern 17, so dass diese gemäß Fig.2 die Kabeloberfläche nicht selbst berühren.

Gemäß Fig.3 hat der Bausatz im Ausführungsbeispiel die schon erwähnten drei unterschiedlich groß bemessenen Typen von Kabelverschraubungen 100, 200 und 300 mit jeweils zwei unterschiedlich bemessenen Klemm- und Dichteinsätzen 4 und 5, wobei der kleinere Klemm- und Dichteinsatz 5 des Typs mit der größten Abmessung baugleich mit dem größeren Klemm- oder Dichteinsatz 4 des mittleren Typs der Kabelverschraubungen und der kleinere Klemmeinsatz 5 des Typs mittlerer Abmessung baugleich mit dem großen Klemm- und Dichteinsatz 4 des kleinsten Typs dieser Kabelverschraubungen ist, so dass diese als separate Teile gefertigten und einsetzbaren Klemm- und Dichteinsätze in entsprechend größerer Stückzahl gefertigt werden können. Dabei wird ausgenutzt, dass die jeweiligen Klemmeinsätze in übereinstimmende Richtungen verlaufende Klemmfinger 17 haben, die innerhalb einer jeweiligen Kabelverschraubung 100, 200 oder 300 zwar unterschiedlich bemessen, aber im übrigen übereinstimmend gestaltet sind, so dass diese Baugleichheit von Klemmeinsätzen 5 eines größeren Typs einer Kabelverschraubung mit dem größeren Klemmeinsatz 4 eines Typs einer Kabelverschraubung mit kleinerer Abmessung ohne irgendwelche Anpassungen in der Formgebung möglich ist.

Ein Bausatz oder Set von mehreren unterschiedlich bemessenen Typen von Kabelverschraubungen 100, 200 und 300, mit denen jeweils Kabel 1 unterschiedlicher Durchmesser oder Abmessungen erfasst und fixiert werden können, enthält jeweils zwei unterschiedlich bemessene Klemm- oder Dichteinsätze 4 und 5, um das Kabel 1 einerseits an einer äußeren Ummantelung 6 und andererseits an einer inneren Ummantelung 7 festklemmen zu können, wobei zwischen beiden Ummantelungen ein Abschirmgeflecht 8 vorgesehen ist, das aus der größeren Ummantelung 6 dort austritt, wo diese endet, so dass es in Berührkontakt mit der jeweiligen Kabelverschraubung treten kann. Der kleinere Klemm- oder Dichteinsatz 5 eines größeren Typs einer solchen Kabelverschraubung hat dabei dieselben Abmessungen auch bezüglich seiner Abstützung in der jeweiligen Schraubhülse wie der größere Klemm- oder Dichteinsatz 4 eines weiteren Typs einer solchen Kabelverschraubung kleinerer Abmessung, d.h. zwei unterschiedlich bemessene Kabelverschraubungen enthalten dennoch jeweils einen baugleichen Klemm- und Dichteinsatz, was die Serienfertigung und Lagerhaltung dieser Dichteinsätze verbessert.

## Patentansprüche

1. Bausatz oder Set umfassend wenigstens zwei unterschiedlich bemessene Typen von Kabelverschraubungen (100, 200, 300) zum Erfassen oder Fixieren von Kabeln (1) unterschiedlicher Durchmesser, wobei jede Kabelverschraubung (100, 200, 300) zwei unterschiedlich bemessene Klemm- und/oder Dichtungsstellen (2, 3) mit zwei unterschiedlich bemessenen Klemm- oder Dichteinsätzen (4, 5) aufweist, und der Klemmeinsa mit einem größeren Innendurchmesser für das Erfassen eines äußeren Kabelmantels (6) und der Klemm-oder Dichteinsatz (5) mit dem kleineren Innendurchmesser zum Erfassen eines wenigstens teilweise abisolierten Bereichs des Kabels (1) beispielsweise an einem inneren Mantel (7) dient, wobei zwischen einer äußeren Ummantelung (6) und einer inneren Ummantelung (7) des Kabels (1) insbesondere ein Abschirmgeflecht (8) vorgesehen ist, das zwischen den beiden Klemm- oder Dichtungsstellen (2, 3) der Kabelverschraubung (100, 200, 300) in Gebrauchsstellung mit dieser in elektrisch leitendem Kontakt ist, wobei die Klemm- oder Dichteinsätze (4, 5) jeweils als separate Teile innerhalb einer Schraubhülse (9, 10) oder einem Gehäuse angeordnet sind, **dadurch gekennzeichnet, dass** der kleinere Klemm- oder Dichteinsatz (5) eines ersten größeren Typs von Kabelverschraubungen (100) die selben Abmessungen wie der größere Klemm- oder Dichteinsa eines zumindest zweiten kleineren Typs der Kabelverschraubung (200) hat.

2. Bausatz nach Anspruch 1, **dadurch gekennzeichnet, dass** der Klemm- und Dichteinsatz (4, 5) einen in eine Schraubhülse (9, 10) passenden und sich an dieser abstützenden Stutzen (15) und an seinem diesen Stutzen (15) und die Schraubhülse (9, 10) überragenden Bereich durch in axialer Richtung verlaufende Schlitze (16) getrennte Klemmfinger (17) hat, die durch eine Druckschraube (18) oder Überwurfmutter (19) mittels vorzugsweise an dieser vorgesehenen Schrägflächen (20) radial einwärts verstellbar sind, wobei die Klemmfinger (17) des größeren und des kleineren Klemmeinsatzes jeweils in der selben Richtung verlaufen.

3. Bausatz nach Anspruch 1 oder 2, **dadurch gekennzeichnet, dass** die Klemmfinger (17) an einem Haltering (24) angeordnet sind, der an einer Formdichtung (25) insbesondere an einem Vorsprung (26) anliegt, wobei die Formdichtung (25) den in die Schraubhülse (9, 10) eingreifenden Stutzen (15) und einen demgegenüber axial vorstehenden Klemm- und Dichtungsbereich (27) aufweist, welcher von den außen angeordneten Klemmfingern (17) zumindest in radialer Richtung beaufschlagt ist.

4. Bausatz nach einem der Ansprüche 1 bis 3, **dadurch gekennzeichnet, dass** der Dichtungsbereich (27) der Formdichtung (25) eine abgestufte Stirnseite hat und mit einem Bereich kleineren Querschnitts in Gebrauchsstellung zwischen Kabeloberfläche und Klemmfingern (17) verläuft.

5. Bausatz nach einem der Ansprüche 1 bis 4, **dadurch gekennzeichnet, dass** er wenigstens drei unterschiedlich groß bemessene Typen von Kabelverschraubungen (100, 200, 300) mit jeweils zwei unterschiedlich bemessenen Klemm- oder Dichteinsätzen (4, 5) aufweist und der kleinere Klemm-oder Dichteinsatz (5) des Typs mit der größten Abmessung baugleich mit dem größeren Klemm- oder Dichteinsatz (4) des mittleren Typs der Kabelverschraubungen und der kleinere Klemm- oder Dichteinsatz (5) des Typs mittlerer Abmessung baugleich mit dem größten Klemm- und Dichteinsa des kleinsten Typs der Kabelverschraubungen ist.

## Claims

1. Kit or set comprising at least two differently dimensioned types of cable glands (100, 200, 300) for gripping or fixing cables (1) of different diameters, wherein each cable gland (100, 200, 300) comprises two differently dimensioned clamping and/or sealing points (2, 3) with two differently dimensioned clamping or sealing inserts (4, 5), and the clamping insert (4) having a larger internal diameter serves to grip an outer cable sheath (6) and the clamping or sealing insert (5) having the smaller internal diameter serves to grip a region of the cable (1) which has been at least partially stripped of insulation, for example on an inner sheath (7), while between an outer sheathing (6) and an inner sheathing (7) of the cable (1) a shielding braid (8) is provided, in particular, which is in electrically conductive contact with the cable gland (100, 200, 300) between the two clamping or sealing points (2, 3) of said cable gland in the position of use, the clamping or sealing inserts (4, 5) each being arranged as separate parts within a threaded sleeve (9, 10) or a housing, **characterised in that** the smaller clamping or sealing insert (5) of a first larger type of cable gland (100) has the same dimensions as the larger clamping or sealing insert (4) of an at least second smaller type of cable gland (200).

2. Kit according to claim 1, **characterised in that** the clamping and sealing insert (4, 5) has a connector (15) fitting into a threaded sleeve (9, 10) and supported on the latter, and on its region projecting over this connector (15) and the threaded sleeve (9, 10) it has clamping fingers (17) separated by axially extending slots (16), said clamping fingers being radially inwardly adjustable by a pressure screw (18) or check nut (19) by means of inclined surfaces (20) preferably provided thereon, the clamping fingers (17) of the larger and smaller clamping inserts each extending in the same direction.

3. Klt according to claim 1 or 2, **characterised in that** the clamping fingers (17) are arranged on a retaining ring (24) which bears against a moulded seal (25), particularly a projection (26), while the moulded seal (25) comprises the connector (15) engaging in the threaded sleeve (9, 10), as well as a clamping and sealing region (27) projecting axially relative thereto, which is acted upon, at least in the radial direction, by the clamping fingers (17), arranged on the outside.

4. Kit according to one of claims 1 to 3, **characterised in that** the sealing region (27) of the moulded seal (25) has a graduated end face and in the position of use extends with a region of smaller cross-section between the cable surface and the clamping fingers (17).

5. Kit according to one of claims 1 to 4, **characterised in that** it comprises at least three differently dimensioned types of cable glands (100, 200, 300) with two differently dimensioned clamping or sealing inserts (4, 5) and the smaller clamping or sealing insert (5) of the type with the largest dimension is identical in construction to the larger clamping or sealing insert (4) of the medium type of cable gland, and the smaller clamping or sealing insert (5) of the type of medium dimensions is identical in construction to the largest clamping and sealing insert (4) of the smallest type of cable gland.

## Revendications

1. Jeu de pièces détachées ou kit comprenant au moins deux types de passe-câbles à vis (100, 200, 300) de dimensions différentes pour saisir ou immobiliser des câbles (1) de diamètres différents, sachant que chaque passe-câble à vis (100, 200, 300) présente deux points de serrage et/ou d'étanchéité (2, 3) de dimensions différentes avec deux inserts de serrage ou d'étanchéité (4, 5) de dimensions différentes, et que l'insert de serrage (4) ayant un plus grand diamètre intérieur sert à saisir une gaine extérieure de câble (6) tandis que l'insert de serrage (5) ayant le plus petit diamètre intérieur sert à saisir une région au moins partiellement dénudée du câble (1), par exemple au niveau d'une gaine intérieure (7), sachant qu'une tresse métallique de blindage (8) est notamment prévue entre une gaine extérieure (6) et une gaine intérieure (7) du câble (1), tresse qui, en position d'utilisation, est en contact électriquement conducteur avec le passe-câble à vis (100, 200, 300) entre les deux points de serrage ou d'étanchéité (2, 3) de ce dernier, sachant que les inserts de serrage ou d'étanchéité (4, 5) sont respectivement disposés en tant qu'éléments séparés à l'intérieur d'une douille filetée (9, 10) ou d'un boîtier, **caractérisé en ce que** l'insert de serrage ou d'étanchéité plus petit (5) d'un premier type plus grand de passe-câbles à vis (100) possède les mêmes dimensions que l'insert de serrage ou d'étanchéité plus grand (4) d'au moins un deuxième type plus petit de passe-câble à vis (200).

2. Jeu de pièces détachées selon la revendication 1, **caractérisé en ce que** l'insert de serrage et d'étanchéité (4, 5) possède un raccord (15) rentrant dans une douille filetée (9, 10) et s'appuyant contre celle-ci, et, sur sa région dépassant de ce raccord (15) et de la douille filetée (9, 10), des doigts de serrage (17) séparés par des fentes (16) s'étendant en direction axiale, doigts qui peuvent être déplacés radialement vers l'intérieur par une vis de pression (18) ou un écrou-raccord (19) au moyen de surfaces obliques (20) prévues de préférence sur cette dernière/ce dernier, sachant que les doigts de serrage (17) du plus grand insert de serrage et du plus petit insert de serrage s'étendent respectivement dans la même direction.

3. Jeu de pièces détachées selon la revendication 1 ou 2, **caractérisé en ce que** les doigts de serrage (17) sont disposés sur une bague de retenue (24) qui s'applique contre un joint d'étanchéité moulé (25), en particulier contre une saillie (26), sachant que le joint d'étanchéité moulé (25) présente le raccord (15) s'engageant dans la douille filetée (9, 10) et une région de serrage et d'étanchéité (27) faisant axialement saillie par rapport à ce raccord, région qui est sollicitée au moins en direction radiale par les doigts de serrage (17) disposés extérieurement.

4. Jeu de pièces détachées selon l'une des revendications 1 à 3, **caractérisé en ce que** la région d'étanchéité (27) du joint d'étanchéité moulé (25) possède un côté frontal échelonné et, en position d'utilisation, s'étend par une région de plus petite section entre la surface du câble et les doigts de serrage (17).

5. Jeu de pièces détachées selon l'une des revendications 1 à 4, **caractérisé en ce qu'**il présente au moins trois types de passe-câbles à vis (100, 200, 300) de dimensions différentes, avec chacun deux inserts de serrage ou d'étanchéité (4, 5) de dimensions différentes, et l'insert de serrage ou d'étanchéité plus petit (5) du type de plus grande dimension est de construction identique à l'insert de serrage ou d'étanchéité plus grand (4, 5) du type intermédiaire des passe-câbles à vis, tandis que l'insert de serrage ou d'étanchéité plus petit (5) du type de dimension intermédiaire est de construction identique au plus grand insert de serrage ou d'étanchéité (4) du plus petit type des passe-câbles à vis.
